# EUROPEAN PATENT SPECIFICATION

(11) **EP 4 195 309 B1**
(45) Date of publication and mention of the grant of the patent: **21.10.2026**
(21) Application number: 22816328.3
(22) Date of filing: 06.05.2022
(51) Int. Cl.: H01M 4/02, H01M 4/04, H01M 4/13, H01M 4/131, H01M 4/1391, H01M 4/36, H01M 4/62, H01M 10/052, H01M 10/0525, H01M 4/505, H01M 4/525

(54) **CATHODE ADDITIVE AND CATHODE CONTAINING SAME FOR LITHIUM SECONDARY BATTERY**
KATHODENADDITIV UND KATHODE DAMIT FÜR LITHIUMSEKUNDÄRBATTERIE
ADDITIF DE CATHODE ET CATHODE LE CONTENANT POUR BATTERIE SECONDAIRE AU LITHIUM

(30) Priority: 03.06.2021 KR 20210071880
(43) Date of publication of application: 14.06.2023
(73) Proprietor: LG Energy Solution, Ltd., Seoul 07335 (KR)
(72) Inventor: KANG, Eun Sil, Daejeon 34122 (KR); OH, Sang Seung, Daejeon 34122 (KR); KIM, Hye Hyeon, Daejeon 34122 (KR); JO, Chi Ho, Daejeon 34122 (KR); YOO, Tae Gu, Daejeon 34122 (KR)
(74) Representative: Hoffmann Eitle
(86) International application number: PCT/KR2022/006465
(87) International publication number: WO 2022/255669

(56) References cited:
- JP-A- 2005 222 744
- JP-A- 2005 222 744
- JP-A- 2013 012 330
- JP-A- 2013 012 330
- JP-A- 2016 177 974
- JP-A- 2017 063 027
- KR-A- 20130 079 109
- KR-A- 20130 079 109
- US-A1- 2011 189 541
- US-A1- 2019 237 756

## Description

### [Technical Field]

The present disclosure relates to a positive electrode additive for a lithium secondary battery and a positive electrode for a lithium secondary battery including the same.

### [Background Art]

In particular, as the technology development and the demand for mobile devices increase, the demand for secondary batteries as energy sources is rapidly increasing. Among these secondary batteries, a lithium secondary battery having a high energy density and a high operating potential, a long cycle lifetime, and a low self-discharge rate has been commercialized and widely used.

Recently, as the lithium secondary batteries are used as power sources for middle-large devices such as electric vehicles, a high capacity, a high energy density, and a low cost of the lithium secondary battery are more required, and there is a demand for an irreversible additive used in an electrode to have a higher irreversible capacity. However, there is a limitation on the development of a positive electrode additive with the above high irreversible capacity.

The existing irreversible additive such as Li₆CoO₄ is generally prepared by reacting cobalt oxide or the like with an excess of lithium oxide. Since the irreversible additive prepared in this way is structurally unstable, when a positive electrode is manufactured under the condition of a high temperature and/or high humidity, the irreversible additive is decomposed to lose irreversible activity and, as charging proceeds, the irreversible additive generates a large amount of gas such as oxygen gas (O₂) and carbon dioxide (CO₂). Since the generated gas not only degrades stability of a battery by causing volume expansion of an electrode assembly, but also a carbon oxide such as CO₂ induces a side reaction that decomposes an electrolyte, the generated gas may act as a major factor causing degradation of battery performance.

Meanwhile, in order to secure adhesive strength between a positive electrode active material and the irreversible additive and adhesive strength between the positive electrode active material and a current collector, a binder is used in a positive electrode mixture layer. However, adhesive strength of the binder may be degraded according to a type of positive electrode active material and a surface condition of the current collector. In order to prevent the degradation of the adhesive strength, when a content of the binder is increased, there is a limitation in that the capacity and electrical conductivity of an electrode are degraded due to an excessive amount of the binder.

Therefore, there is a demand for development of a lithium secondary battery with excellent electrical performance and lifetime by minimizing the damage to a positive electrode additive contained in a positive electrode and improving adhesive strength between a positive electrode current collector and a mixture layer which are provided in the positive electrode.

### [Related Art Document]

### [Patent Documents]

Korean Patent Laid-Open Application No. 10-2019-0078392
US 2011/189541 A1 describes a cathode for a secondary lithium battery that includes a current collector and a cathode mixture layer formed on the surface of the current collector. The cathode mixture layer is formed by stacking two layers one on another, each of which contains a cathode active material, a conductive material and a binder, and the cathode active material contains a lithium-containing composite oxide that forms a polyanion. Of the two layers, the binder that composes a first layer that is in contact with the current collector contains a polymer formed by polymerizing at least one of monomers consisting of a monomer derived from 1-olefin and a monomer derived from a vinyl compound; and the binder that forms a second layer formed on the first layer contains a fluorine resin.

KR 2013 0079109 A describes a positive electrode active material for a lithium secondary battery that comprises an intercalation and de-intercalation-available lithiated intercalation compound; and a metal oxide represented by LiₓM_{y}M'_{(1-y)}O₄ where M is selected from Co, Ni, Mn, Fe, and a combination thereof; M' is selected from Co, Ni, Mn, Fe, Al, Mg, Zn, Ti, and combinations thereof; but M and M' are different from each other; and 5.00≤x≤6.05 and 0≤y≤1.

JP 2013-012330 A describes a nonaqueous electrolyte secondary battery that comprises: a positive electrode comprising a positive electrode collector, a first active material layer, and a second active material layer; a negative electrode containing a negative electrode active material capable of storing and discharging lithium ions; and an electrolytic solution containing a salt of a lithium ion and an anion. The first active material layer contains a first active material capable of storing and discharging lithium ions, and the second active material layer contains a second active material composed of an organic compound capable of storing and discharging anions, and a conductive assistant. The second active material layer is provided between the positive electrode collector and the first active material layer.

JP 2005 222744 A describes a negative electrode plate having, on one surface, a first negative electrode mix layer containing a non-fluorine-based binder of a mixture or the like of styrene-butadiene-based rubber and a cellulose-based compound and having, on the other surface, a second negative mix layer containing a fluorine-based binder of a polyvinylidene fluoride-based substance or the like and a positive electrode plate are stacked by interposing a separator so that the first negative electrode mix layer is set closest to the outside periphery.

US 2019/237756 A1 describes an electrode for an aqueous lithium-ion battery that includes a current collector, a coating layer, and a composite layer. The coating layer is disposed on at least one surface of the current collector, and the coating layer contains an active material. The composite layer is disposed on a surface of the coating layer. The composite layer includes a first film and a second film, wherein the first film is between the second film and the surface of the coating layer, and the water contact angle of the first film is greater than the water contact angle of the second film.

### [Disclosure]

### [Technical Problem]

An object of the present invention is to provide a positive electrode for a lithium secondary battery, which optionally contains an irreversible additive in a positive electrode mixture layer provided in a positive electrode and is capable of improving the adhesive strength between the positive electrode mixture layer and a positive electrode current collector while minimizing the damage to the irreversible additive so that electrical performance and lifetime of the battery is improved, and a lithium secondary battery including the same.

### [Technical Solution]

In the present technology, there is provided a positive electrode for a lithium secondary battery, which has a structure in which a current collector, a first mixture layer, and a second mixture layer are sequentially stacked, wherein the first mixture layer includes a first binder composed of a rubber-based resin, and the second mixture layer includes a second binder composed of a fluorine-based resin derived from a fluorine (F)-containing monomer.

A deviation between a static water contact angle of the first mixture layer and a static water contact angle of the second mixture layer is 10° or more, and specifically, may range from 10° to 30°.

The rubber-based resin may include one or more selected from the group consisting of styrene-butadiene rubber, nitrile-butadiene rubber, methyl methacrylate-butadiene rubber, chloroprene rubber, carboxy-modified styrene-butadiene rubber, and a modified polyorganosiloxane polymer.

The fluorine-based resin may include a resin derived from one or more monomers selected from the group consisting of vinylidene fluoride (VDF or VF2), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, and 2-trifluoromethyl-3, 3,3-trifluoropropene.

A content of the first binder may range from 0.5 to 5 parts by weight based on 100 parts by weight of the first mixture layer, a content of the second binder may range from 0.5 to 10 parts by weight based on 100 parts by weight of the second mixture layer, and a total content of the first binder and the second binder may range from 0.1 to 5 parts by weight based on 100 parts by weight of the entire mixture layer.

Any one or more mixture layers of the first mixture layer and the second mixture layer may contain a positive electrode additive represented by the following Chemical Formula 1.

[Chemical Formula 1] LiₚCo_{(1-q)}M¹_{q}O₄

In Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode additive may be included an amount ranging from 0.1 to 5 parts by weight based on 100 parts by weight of each positive electrode mixture layer.

The positive electrode additive may have a tetragonal structure with a space group of P4₂/nmc.

The first mixture layer may include a first positive electrode active material, a first conductive material, the positive electrode additive, and the first binder, and the second mixture layer may include a second positive electrode active material, a second conductive material, and the second binder.

Each of the first positive electrode active material and the second positive electrode active material may include a lithium metal composite oxide represented by the following Chemical Formula 2.

[Chemical Formula 2] Liₓ[Ni_{y}Co_{z}Mn_{w}M²ᵥ]Oᵤ

In Chemical Formula 2, M² denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively.

Each of the first conductive material and the second conductive material may include one or more selected from the group consisting of natural graphite, artificial graphite, carbon black, acetylene black, Ketjen black, carbon nanotubes, graphene, and a carbon fiber.

A content of each of the first conductive material and the second conductive material may range from 0.5 to 5 parts by weight based on 100 parts by weight of each positive electrode mixture layer.

In the present technology, there is provided a method of manufacturing a positive electrode for a lithium secondary battery, which includes forming a first mixture layer containing a first binder composed of a rubber-based resin on a positive electrode current collector, and forming a second mixture layer containing a second binder composed of a fluorine-based resin derived from a fluorine (F)-containing monomer on the first mixture layer, a static water contact angle of the first mixture layer is 10° or more greater than a static water contact angle of the second mixture layer.

Any one or more mixture layers of the first mixture layer and the second mixture layer may contain a positive electrode additive represented by the following Chemical Formula 1.

[Chemical Formula 1] LiₚCo_{(1-q)}M¹_{q}O₄

In Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The forming of the first mixture layer may include preparing a mixture composition by dry mixing a first positive electrode active material, a positive electrode additive represented by Chemical Formula 1, a first conductive material, and a first binder composed of a rubber-based resin, and applying the prepared mixture composition on a positive electrode current collector.

### [Advantageous Effects]

A positive electrode for a lithium secondary battery according to the present technology has a structure in which a current collector, a first mixture layer, and a second mixture layer are sequentially stacked. By using a binder exhibiting more hydrophobicity than a binder, which is contained in the second mixture layer, in the first mixture layer located adjacent to a positive electrode current collector, since the adhesive strength between a positive electrode current collector and the mixture layer can be further improved, durability of the positive electrode can be improved. In addition, when the first mixture layer contains the positive electrode additive, loss to the positive electrode additive can be minimized when the positive electrode is manufactured due to a first binder with a low affinity for water, and thus there is an advantage of being able to further improve the electrical performance and lifetime of the lithium secondary battery.

### [Best Mode]

In the present invention, the terms "comprising," "having," and the like are used to specify the presence of a feature, a number, a step, an operation, a component, an element, or a combination thereof described herein, and they do not preclude the presence or addition of one or more other features, numbers, steps, operations, components, elements, or combinations thereof.

In addition, in the present invention, when a portion of a layer, a film, a region, a plate, or the like is described as being "on" another portion, this includes not only a case in which the portion is "directly on" another portion but also a case in which still another portion is present between the portion and another portion. Conversely, when a portion of a layer, a film, a region, a plate, or the like is described as being "under" another portion, this includes not only a case in which the portion is "directly under" another portion but also a case in which still another portion is present between the portion and another portion. In addition, in this application, being disposed "on" may include the case of being disposed not only on an upper portion but also on a lower portion.

In addition, in the present invention, a "main component" may mean 50 wt% or more, 60 wt% or more, 70 wt% or more, 80 wt% or more, 90 wt% or more, 95 wt% or more, or 97.5 wt% or more based on a total weight of a composition or a specific component and, in some cases, when constituting the entire composition or specific component, may mean 100 wt%.

In addition, in the present invention, "Ah" is a capacity unit of a lithium secondary battery and is referred to as an "ampere-hour" and means an amount of current per hour. For example, a battery capacity being "3000 mAh" means that a battery is capable of being discharged with a current of 3000 mA for one hour.

In addition, in the present invention, a "contact angle" is an angle between a liquid surface and a solid surface when a liquid comes into contact with the solid surface.

Hereinafter, the present invention will be described in more detail.

### Positive electrode for lithium secondary battery

In one embodiment of the present technology, there is provided a positive electrode for a lithium secondary battery, which has a structure in which a current collector, a first mixture layer, and a second mixture layer are sequentially stacked, the first mixture layer includes a first binder composed of a rubber-based resin, the second mixture layer includes a second binder composed of a fluorine-based resin derived from a fluorine (F)-containing monomer, a static water contact angle of the first mixture layer is 10° or more greater than a static water contact angle of the second mixture layer and any one or more mixture layers of the first mixture layer and the second mixture layer contain a positive electrode additive represented by the following Chemical Formula 1.

[Chemical Formula 1] LiₚCo_{(1-q)}M¹_{q}O₄

In Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode for a lithium secondary battery according to the present technology has a structure in which a mixture layer having a dual-layer structure is provided on a positive electrode current collector. In this case, the mixture layers forming the dual-layer structure, specifically, the first mixture layer and the second mixture layer, include different types of binders having different affinities for water.

The first mixture layer contains a binder composed of a rubber-based resin having a low affinity for water as the first binder. The first binder may include one or more selected from the group consisting of styrene-butadiene rubber, nitrile-butadiene rubber, methyl methacrylate-butadiene rubber, chloroprene rubber, carboxy-modified styrene-butadiene rubber, and a modified polyorganosiloxane polymer.

In addition, the second mixture layer contains a binder composed of a fluorine-based resin derived from a fluorine-containing monomer having a higher affinity for water as the second binder. The second binder may include a resin derived from one or more monomers selected from the group consisting of vinylidene fluoride (VDF or VF2), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, and 2-trifluoromethyl-3, 3,3-trifluoropropene.

The second binder may have a crystalline phase and/or an amorphous phase in the positive electrode mixture layer, specifically, may have both a crystalline phase and an amorphous phase, and among the phases, the amorphous phase may occupy 51% or more or 55% or more of the total crystalline phase. As an example, the second binder may include the amorphous phase of the total crystalline phase at 51 to 95%, 51 to 90%, 51 to 85%, 51 to 80%, 51 to 75%, 51 to 70%, 51 to 65%, or 51 to 55%. The second binder may have a different affinity for water according to the crystalline phase in the mixture layer. When a crystal form is an amorphous phase, an affinity for water may be high. In the present technology, the amorphous phase in the total crystalline phase of the second binder is contained to exceed 50%, and thus wettability of the second mixture layer for the electrolyte can be improved.

In the present technology, a rubber-based resin is contained, as the first binder, in the first mixture layer adjacent to the positive electrode current collector, and a fluorine-based resin derived from a fluorine-containing monomer is contained, as the second binder, in the second mixture layer. In this case, the rubber-based resin that is the first binder may have a lower affinity for water than the fluorine-based resin that is the second binder.

When static water contact angles for the first mixture layer containing the first binder and the second mixture layer containing the second binder are measured, a deviation between the static water contact angle of the first mixture layer and the static water contact angle of the second mixture layer according to a difference in affinity for water between the first binder and the second binder is 10° or more, and may specifically be 15° or more, 20° or more, may range from 10° to 30°, from 15° to 30°, from 20° to 30°, from 10° to 16°, or from 14° to 19°. In the present technology, by controlling a deviation in static water contact angle between the first mixture layer and the second mixture layer to the above range(s), it is possible to improve the adhesive strength between the positive electrode current collector and the first mixture layer and the adhesive strength between the first mixture layer and the second mixture layer, and simultaneously, it is possible to improve the wettability of the second mixture layer for the electrolyte.

As an example, the first mixture layer has a relatively low affinity for water compared to the second mixture layer, and thus may have excellent adhesive strength for the positive electrode current collector that is a metal. Specifically, the positive electrode manufactured according to the present technology has an adhesive strength between the positive electrode current collector and the mixture layer that may be at least 1.5 times stronger than a case in which a binder (that is, the second binder) composed of a fluorine-based resin such as PVdF is used in both the first mixture layer and the second mixture layer, and more specifically, at least 1.8 times stronger, at least 2 times stronger, at least 2.2 times stronger, or at least 2.5 times stronger.

Here, a content of the first binder may range from 0.5 to 5 parts by weight based on 100 parts by weight of the first mixture layer, a content of the second binder may range from 0.5 to 10 parts by weight based on 100 parts by weight of the second mixture layer, and a total content of the first binder and the second binder may range from 0.1 to 5 parts by weight based on 100 parts by weight of the entire mixture layer.

Specifically, the content of the first binder may be range from 0.5 to 4 parts by weight, from 0.5 to 3 parts by weight, from 0.5 to 2 parts by weight, from 1 to 3 parts by weight, from 2 to 5 parts by weight, or from 1.5 to 2.5 parts by weight based on 100 parts by weight of the first mixture layer, and the content of the second binder may range from 0.5 to 8 parts by weight, from 0.5 to 6 parts by weight, from 0.5 to 5 parts by weight, from 0.5 to 3 parts by weight, from 0.5 to 2 parts by weight, from 1 to 3 parts by weight, or from 2 to 4 parts by weight based on 100 parts by weight of the second mixture layer.

**In** addition, the total content of the first binder and the second binder may range from 0.5 to 4 parts by weight, from 0.5 to 3 parts by weight, from 0.5 to 2 parts by weight, from 1 to 3 parts by weight, from 2 to 5 parts by weight, or from 1.5 to 2.5 parts by weight based on 100 parts by weight of the entire mixture layer.

**In** the present technology, by controlling the contents of the first binder and the second binder which are contained in the first mixture layer and the second mixture layer, respectively, as described above, the adhesive strength between the positive electrode current collector and the first mixture layer and the adhesive strength between the first mixture layer and the second mixture layer may be easily improved.

Meanwhile, in the positive electrode according to the present technology, any one or more mixture layers of the first mixture layer and the second mixture layer may contain a positive electrode additive represented by the following Chemical Formula 1.

[Chemical Formula 1] LiₚCo_{(1-q)}M¹_{q}O₄

In Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode additive may contain lithium in excess and may provide lithium for lithium consumption generated by an irreversible chemical and physical reaction at the negative electrode during initial charging, and thus a charging capacity of the battery is increased and the irreversible capacity is reduced so that lifetime characteristics can be improved.

Among the positive electrode additives, when compared to nickel-containing oxides commonly used in the art, the positive electrode additive represented by Chemical Formula 1 has a higher content of lithium ions, and thus lithium ions which are lost due to an irreversible reaction during initial activation of the battery may be supplemented so that it is possible to significantly improve a charging/discharging capacity of the battery. In addition, when compared to iron and/or manganese-containing oxide commonly used in the art, since there is no side reaction occurring due to elution of a transition metal during charging and discharging of the battery, there is an advantage of excellent battery stability. The lithium cobalt oxide represented by Chemical Formula 1 may include Li₆CoO₄, Li₆Co_{0.5}Zn_{0.5}O₄, Li₆Co_{0.7}Zn_{0.3}O₄, and the like.

In addition, an average particle size of the lithium cobalt oxide represented by Chemical Formula 1 may range from 0.1 to 10 µm, and specifically, from 0.1 to 8 µm, from 0.1 to 5 µm, from 0.1 to 3 µm, from 0.5 to 2 µm, from 0.1 to 0.9 µm, from 0.1 to 0.5 µm, from 0.6 to 0.9 µm, from 1 to 4 µm, from 4 to 6 µm, or from 6 to 9 µm. In the present technology, by controlling the average particle size of the lithium cobalt oxide within the above range, irreversible activity of the lithium cobalt oxide may be increased, and the powder electrical conductivity of the lithium cobalt oxide can be prevented from being degraded.

In addition, the lithium cobalt oxide represented by Chemical Formula 1 may have a tetragonal crystal structure, and among tetragonal crystal structures, the lithium cobalt oxide may be included in a space group of P4₂/nmc having a twisted tetrahedral structure formed by a cobalt element and an oxygen element. Since the positive electrode additive having a twisted tetrahedral structure has the twisted tetrahedral structure formed by the cobalt element and the oxygen element and it is structurally unstable, the positive electrode additive may be damaged due to side reactions with moisture (H₂O) and the like in the air when the positive electrode is manufactured so that battery electrical performance may be degraded. However, in the present technology, since damage to the positive electrode additive can be minimized using a binder with a low affinity for water as a binder of the mixture layer, the electrical performance and lifetime of the lithium secondary battery can be further improved.

In addition, the positive electrode additive may be included in an amount of 0.1 to 5 parts by weight based on 100 parts by weight of each positive electrode mixture layer, and specifically, 0.1 to 4 parts by weight, 0.1 to 3 parts by weight, 0.1 to 2 parts by weight, 0.1 to 1 part by weight, 0.5 to 2 parts by weight, 1 to 3 parts by weight, 2 to 4 parts by weight, 1.5 to 3.5 parts by weight, 0.5 to 1.5 parts by weight, or 1 to 2 parts by weight.

As an example, the positive electrode additive may be included in an amount of 0.1 to 0.5 parts by weight based on 100 parts by weight of the first mixture layer and in an amount of 0.2 to 0.6 parts by weight based on 100 parts by weight of the second mixture layer.

As another example, the positive electrode additive may be included only in the first mixture layer, and in this case, the amount included in the first mixture layer may range from 0.5 to 2 parts by weight based on 100 parts by weight of the entire mixture layer.

**In** addition, the first mixture layer may include a first positive electrode active material, a first conductive material, and the first binder, the second mixture layer may include a second positive electrode active material, a second conductive material, and the second binder, and the positive electrode additive may be included in any one of the first mixture layer and the second mixture layer.

As an example, the first mixture layer may include the first positive electrode active material, the first conductive material, the positive electrode additive, and the first binder, and the second mixture layer may include the second positive electrode active material, the second conductive material, and the second binder. **In** the present technology, the positive electrode additive is included in the first mixture layer, and thus, since damage to the positive electrode additive due to a high temperature and/or high humidity when the positive electrode is manufactured is minimized, there is an advantage of being able to further improve the electrical performance and lifetime of the lithium secondary battery.

**In** this case, the first positive electrode active material and the second positive electrode active material may each be a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr), and zirconium (Zr). For example, the first positive electrode active material and the second positive electrode active material may each include a lithium metal composite oxide represented by the following Chemical Formula 2, which is capable of reversible intercalation and deintercalation.

[Chemical Formula 2] Liₓ[Ni_{y}Co_{z}Mn_{w}M²ᵥ]Oᵤ

In Chemical Formula 2, M² denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively.

The lithium metal composite oxide represented by Chemical Formula 2 is a composite metal oxide including Li, nickel, cobalt, and manganese, and in some cases, may have a form in which another transition metal (M²) is doped. For example, the first positive electrode active material and the second positive electrode active material may each include one or more compounds selected from the group consisting of LiNi_{1/3}Co_{1/3}Mn_{1/3}O₂, LiNi_{0.6}Co_{0.2}Mn_{0.2}O₂, LiNi_{0.8}Co_{0.1}Mn_{0.1}O₂, LiNi_{0.9}Co_{0.05}Mn_{0.05}O₂, LiNi_{0.8}Co_{0.1}Mn_{0.05}Al_{0.05}O₂, and LiNi_{0.7}Co_{0.1}Mn_{0.1}Al_{0.1}O₂. As an example, each of the first positive electrode active material and the second positive electrode active material may be a lithium metal composite oxide represented by Chemical Formula 2, and LiNi_{0.6}Co_{0.2}Mn_{0.2}O₂, and LiNi_{0.8}Co_{0.1}Mn_{0.1}O₂ alone or a combination thereof may be used as the positive electrode active material.

In addition, the first conductive material and the second conductive material may be used to improve the performance of the positive electrode, such as electrical conductivity and the like, and the first conductive material and the second conductive material may each include one or more selected from the group consisting of natural graphite, artificial graphite, carbon black, acetylene black, Ketjen black, carbon nanotubes, graphene, and a carbon fiber.

Here, a content of each of the first conductive material and the second conductive material may range from 0.5 to 5 parts by weight based on 100 parts by weight of each mixture layer, and specifically, from 0.5 to 4 parts by weight, from 0.5 to 3 parts by weight, from 0.5 to 1 part by weight, from 0.5 to 2 parts by weight, from 1 to 3 parts by weight, from 2 to 4 parts by weight, from 1.5 to 3.5 parts by weight, from 0.5 to 1.5 parts by weight, or from 1 to 2 parts by weight.

Further, an average thickness of each of the first mixture layer and the second mixture layer is not particularly limited, and specifically, may range from 50 µm to 200 µm, from 50 µm to 150 µm, from 50 µm to 100 µm, from 50 µm to 80 µm, from 70 µm to 120 µm, or from 60 µm to 110 µm. In addition, the total thickness of the first mixture layer and the second mixture layer may range from 50 µm to 300 µm, and specifically, from 100 µm to 200 µm, from 80 µm to 150 µm, from 120 µm to 170 µm, from 150 µm to 300 µm, from 200 µm to 300 µm, or from 150 µm to 190 µm.

In addition, as the positive electrode current collector in the positive electrode, a material having high conductivity without causing a chemical change in the battery may be used. For example, stainless steel, aluminum, Ni, titanium, or calcined carbon may be used, and in the case of using aluminum or stainless steel, one whose surface is treated with carbon, Ni, titanium, or silver may be used. In addition, fine irregularities may be formed on a surface of the positive electrode current collector to enhance a bonding force of the positive electrode active material, and a positive electrode current collector in any form such as a film, a sheet, a foil, a net, a porous body, a foam, or a nonwoven fabric may be used. In addition, an average thickness of the positive electrode current collector may be appropriately applied in the range of 3 µm to 500 µm in consideration of the conductivity and total thickness of the positive electrode to be manufactured.

### Method of manufacturing positive electrode for lithium secondary battery

In addition, according to one embodiment of the present technology, there is provided a method of manufacturing a positive electrode for a lithium secondary battery, which includes forming a first mixture layer containing a first binder composed of a rubber-based resin on a positive electrode current collector, and forming a second mixture layer containing a second binder composed of a fluorine-based resin derived from a fluorine-containing monomer on the first mixture layer, a static water contact angle of the first mixture layer is 10° or more greater than a static water contact angle of the second mixture layer, wherein any one or more mixture layers of the first mixture layer and the second mixture layer contain a positive electrode additive represented by the following Chemical Formula 1.

[Chemical Formula 1] LiₚCo_{(1-q)}M¹_{q}O₄

In Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The method of manufacturing a positive electrode for a lithium secondary battery according to the present technology may be performed through a process of forming a mixture layer having a dual-layer structure on a positive electrode mixture layer. Specifically, the manufacturing method is performed by sequentially forming the first mixture layer and the second mixture layer on a positive electrode current collector, the first mixture layer and the second mixture layer may include a first binder and a second binder having different affinities for water, respectively, and the positive electrode additive may be contained in any one or more of the first mixture layer and the second mixture layer.

Here, the first mixture layer may be formed by dry mixing a first positive electrode active material, a positive electrode additive represented by Chemical Formula 1, a first conductive material, and a first binder composed of a rubber-based resin, which constitute the mixture layer, at a speed ranging from 1000 rpm to 4000 rpm at room temperature (e.g., 22±3 °C) to prepare a mixture composition, and applying the prepared mixture composition on the positive electrode current collector.

In the present technology, since a process of drying a solvent used when a wet method is performed may be omitted by forming the first mixture layer using the dry method as described above, productivity can be improved, and a phenomenon in which the binder and the conductive material move to a surface of the mixture layer in the drying process of the solvent can be prevented. In addition, the dry mixing method performed at a high speed ranging from 1000 to 4000 rpm may realize an effect of uniformly coating a surface of each particle with the first binder, thereby not only improving adhesive strength between the particles and/or between the current collector and the mixture layer, but also, when the positive electrode additive is contained in the first mixture layer, it is possible to effectively prevent the positive electrode additive from being damaged by moisture when the positive electrode is manufactured.

In addition, the method of manufacturing a positive electrode for a lithium secondary battery includes a process of forming a second mixture layer on the formed first mixture layer. In this case, a method of forming the second mixture layer is not particularly limited and any method in the art may be applied. Specifically, the second mixture layer may be formed by a wet method of forming a positive electrode slurry in which the second positive electrode active material, the second conductive material, and the second binder are mixed in a solvent. In some cases, the second mixture layer may be formed using the dry method like the first mixture layer.

In this case, when the second mixture layer is formed using the wet method, a usable solvent may include one or more polar aprotic solvents selected from among N-methyl-2-pyrrolidone (NMP), dimethylacetamide (N,N-dimethyl acetamide (DMAc)), dimethylformamide (DMF), dimethyl sulfoxide (DMSO), acetonitrile (ACN), dimethylformamide (DMF), acetone, and ethyl acetate. In the present technology, the above solvents are used in the wet method when forming the second mixture layer so that, when the positive electrode additive is included in the second mixture layer, it is possible to uniformly mix the second positive electrode active material, the second conductive material, and the second binder while minimizing damage to the positive electrode additive.

In addition, when the process of forming the second mixture layer is performed using the wet method, drying of the positive electrode slurry applied on the positive electrode current collector may be performed in a vacuum state at a temperature of 140 °C or less, and specifically, 130°C or less, 120 °C or less, 110 °C or less, 100 °C or less, 80 °C or less, 70 °C or less, 60 °C or less, 50 °C or less, 40 °C or less, ranging from 20 °C to 140 °C, from 20 °C to 120°C, from 20 °C to 100°C, from 20 °C to 90 °C, from 20 °C to 70 °C, from 20 °C to 50 °C, from 40 °C to 90 °C, from 60 °C to 140 °C, from 90 °C to 140 °C, or from 100 °C to 130°C.

In the present technology, the drying of the positive electrode slurry is performed under the above-described conditions so that it is easy to control a ratio of the amorphous phase in the crystalline phase of the fluorine-based resin, which is the second binder, to be 51% or more.

The method of manufacturing a positive electrode for a lithium secondary battery according to the present technology includes the above operations, thereby having an advantage of being able to minimize damage to the positive electrode additive to be manufactured, improve wettability for the electrolyte to improve electrical performance of the battery, and improve adhesive strength of the positive electrode for a lithium secondary battery to improve a lifetime of the battery.

### Lithium secondary battery

In one embodiment of the present technology, there is provided a lithium secondary battery including the above-described positive electrode according to the present technology, a negative electrode, and a separator interposed between the positive electrode and the negative electrode.

Since the lithium secondary battery according to the present technology has the above-described positive electrode of the present technology, the adhesive strength between the positive electrode current collector and the mixture layer may be further improved, and thus, since durability of the positive electrode can be improved and damage to the positive electrode additive can be minimized when the positive electrode is manufactured, there is an advantage of further improving the electrical performance and lifetime of the lithium secondary battery.

The lithium secondary battery of the present technology has a structure including the positive electrode, the negative electrode, and the separator interposed between the positive electrode and the negative electrode.

Here, the negative electrode is manufactured by applying, drying, and pressing the negative electrode active material on a negative electrode current collector, and the same conductive material as in the positive electrode, an organic binder polymer, and an additive may be selectively included.

In addition, the negative electrode active material may include, for example, a carbon material and a silicon material. The carbon material means a carbon material containing carbon atoms as a main component. The carbon material may include one or more selected from the group consisting of graphite with a completely layered crystal structure as natural graphite, soft carbon with a low crystallinity layered crystal structure (a graphene structure is a structure in which hexagonal honeycomb planes of carbon are disposed in layers), hard carbon in which these structures are mixed with amorphous portions, artificial graphite, expanded graphite, carbon fiber, non-graphitized carbon, carbon black, acetylene black, Ketjen black, carbon nanotubes, fullerenes, activated carbon, graphene, and carbon nanotubes. More preferably, the carbon material may include natural graphite and/or artificial graphite and may include any one or more of graphene and carbon nanotubes together with the natural graphite and/or the artificial graphite. In this case, the carbon material may include graphene and/or carbon nanotubes at 50 to 95 parts by weight based on 100 parts by weight of the total amount of the carbon material, and more specifically, the carbon material may include graphene and/or carbon nanotubes at 60 to 90 parts by weight or 70 to 80 parts by weight based on 100 parts by weight of the total amount of the carbon material.

In addition, the silicon material is a particle including, as a main component, silicon (Si) as a metal component and may include one or more of Si particles and silicon oxide (SiO_{X} and 1≤X≤2) particles. As an example, the silicon material may include Si particles, silicon monoxide (SiO) particles, silicon dioxide (SiO₂) particles, or a mixture thereof.

In addition, the silicon material may have a mixed form of crystalline particles and amorphous particles, and a proportion of the amorphous particles is 50 to 100 parts by weight, specifically, 50 to 90 parts by weight, 60 to 80 parts by weight, or 85 to 100 parts by weight based on100 parts by weight of the total silicon material. In the present technology, since the proportion of the amorphous particles contained in the silicon material is controlled to the above range, thermal stability and flexibility can be improved in a range that does not degrade electrical properties of the electrode.

In addition, the negative electrode active material includes a carbon material and a silicon material and may be included at 1 to 20 parts by weight 100 parts by weight of a negative electrode mixture layer, and specifically, 5 to 20 parts by weight, 3 to 10 parts by weight, 8 to 15 parts by weight, 13 to 18 parts by weight, or 2 to 7 parts by weight based on 100 parts by weight of the negative electrode mixture layer.

In the present technology, the content of the carbon material and the silicon material included in the negative electrode active material is adjusted to the above ranges so that it is possible to improve a charging capacity per unit mass while reducing lithium consumption and irreversible capacity loss during the initial charging and discharging of the battery.

As an example, the negative electrode active material may include graphite at 95±2 parts by weight and a mixture, in which SiO particles and SiO₂ particles are uniformly mixed, at 5±2 parts by weight based on 100 parts by weight of the negative electrode mixture layer. In the present technology, the content of the carbon material and the silicon material included in the negative electrode active material is adjusted to the above ranges so that it is possible to improve a charging capacity per unit mass while reducing lithium consumption and irreversible capacity loss during the initial charging and discharging of the battery.

In addition, the negative electrode mixture layer may have an average thickness ranging from 100 µm to 200 µm, and specifically, from 100 µm to 180 µm, from 100 µm to 150 µm, from 120 µm to 200 µm, from 140 µm to 200 µm, or from 140 µm to 160 µm.

In addition, the negative electrode current collector is not particularly limited as long as a material has high conductivity without causing a chemical change in the battery, and for example, copper, stainless steel, Ni, titanium, or calcined carbon may be used for the negative electrode current collector, and in the case of using copper or stainless steel, one whose surface is treated with carbon, nickel, titanium, or silver may be used. **In** addition, like the positive electrode current collector, fine irregularities may be formed on a surface of the negative electrode current collector to enhance a bonding force with the negative electrode active material, and a negative electrode current collector in various forms such as a film, a sheet, a foil, a net, a porous body, a foam, and nonwoven fabric may be used. **In** addition, an average thickness of the negative electrode current collector may be appropriately applied in the range of 3 µm to 500 µm in consideration of the conductivity and total thickness of the negative electrode to be manufactured.

**In** addition, the separator is interposed between the positive electrode and the negative electrode, and an insulating thin film having high ion permeability and high mechanical strength is used as the separator. The separator is not particularly limited as long as it is generally used in the art, and specifically, chemical-resistant and hydrophobic polypropylene, glass fiber, or a sheet or nonwoven fabric made of polyethylene may be used as the separator. **In** some cases, a composite separator in which a porous polymer base material such as the sheet or nonwoven fabric is coated with inorganic particles/organic particles by an organic binder polymer may be used the separator. When a solid electrolyte such as a polymer is used as the electrolyte, the solid electrolyte may also serve as the separator. **In** addition, the separator may have an average pore diameter ranging from 0.01 µm to 10 µm, and an average thickness ranging from 5 µm to 300 µm.

Meanwhile, the positive electrode and the negative electrode may be wound in the form of a jelly roll and accommodated in a cylindrical battery, a prismatic battery, or a pouch-type battery or may be accommodated in a pouch-type battery in a folding or stack-and-folding form, but the present technology is not limited thereto.

In addition, an electrolyte containing a lithium salt according to the present technology may consist of an electrolyte and a lithium salt, and a non-aqueous organic solvent, an organic solid electrolyte, or an inorganic solid electrolyte may be used as the electrolyte.

For example, as the non-aqueous organic solvent, an aprotic organic solvent such as N-methyl-2-pyrrolidinone, ethylene carbonate, propylene carbonate, butylene carbonate, dimethyl carbonate, diethyl carbonate, gamma-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate may be used.

For example, as the organic solid electrolyte, a polyethylene derivative, a polyethylene oxide derivative, a polypropylene oxide derivative, a phosphate ester polymer, poly agitation lysine, polyester sulfide, polyvinyl alcohol (PVA), polyvinylidene fluoride, or a polymer containing an ionic dissociation group may be used.

Nitride, halide, or sulfate of lithium such as Li₃N, LiI, Li₅NI₂, Li₃N-LiI-LiOH, LiSiO₄, LiSi0₄-LiI-LiOH, Li₂SiS₃, Li₄SiO₄, Li₄SiO₄-LiI-LiOH, or Li₃PO₄-Li₂S-SiS₂ may be used as the inorganic solid electrolyte.

The lithium salt is a material that is easily soluble in a non-aqueous electrolyte. For example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium 4-phenylboronate, or imide may be used as the lithium salt.

In addition, for the purpose of improving charging/discharging characteristics and flame retardancy, for example, pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxyethanol, and aluminum trichloride may be added to the electrolyte. In some cases, in order to impart incombustibility, a halogen-containing solvent such as carbon tetrachloride and ethylene trifluoride may be further included, and in order to improve a high-temperature storage characteristic, a carbon dioxide gas may be further included, and fluoro-ethylene carbonate (FEC) and propene sultone (PRS) may be further included.

### [Detailed Description of the Preferred Embodiments]

Hereinafter, the present invention will be described in more detail with reference to examples and experimental examples.

### Examples 1 to 3 and Comparative Examples 1 to 2. Manufacture of positive electrode for lithium secondary battery

47.7 parts by weight of LiNi_{0.6}Co_{0.2}Mn_{0.2}O₂ (an average particle size: 1±0.5 µm) as a first positive electrode active material, 0.8 parts by weight of Li₆CoO₄ as a positive electrode additive, 0.5 parts by weight of carbon black (an average particle size: 2±0.5 µm) as a first conductive material, and 1 part by weight of styrene-butadiene rubber (SBR) as a first binder were weighed and added to a homo mixer, and mixed at a speed of 3,000±500 rpm at room temperature for 50 to 70 minutes so that a mixture composition was prepared.

Separately, N-methylpyrrolidone was injected into a homo mixer, and 48.5 parts by weight of LiNi_{0.6}Co_{0.2}Mn_{0.2}O₂ (an average particle size: 1±0.5 µm) as a second positive electrode active material, 0.5 parts by weight of carbon black (an average particle size: 2±0.5 µm) as a second conductive material, and 1 part by weight of PVdF as a second binder were weighed, added, and mixed at a speed of 2,000 ± 500 rpm at room temperature for 50 to 70 minutes based on 100 parts by weight of a solid content of a positive electrode slurry so that a positive electrode slurry was prepared.

Thereafter, the previously prepared mixture composition was applied on one surface of an aluminum current collector and passed between hot-press rollers to form a rolled first mixture layer. Then, the positive electrode slurry was continuously applied on the first mixture layer, vacuum-dried, and rolled under the temperature conditions shown in Table 1 below so that a positive electrode for a lithium secondary battery was manufactured. In this case, thicknesses of the first mixture layer and the second mixture layer were 55 µm and 80 µm, respectively, and the total thickness of the prepared positive electrode was about 200 µm.

**[Table 1]**

| | Example 1 | Example 2 | Example 3 | Comparative Example 1 | Comparative Example 2 |
|---|---|---|---|---|---|
| Drying temperature of second mixture layer | 40±5 °C | 70±5 °C | 130±5 °C | 150±5 °C | 180±5 °C |

### Comparative Example 3. Manufacture of positive electrode for lithium secondary battery

A positive electrode for a lithium secondary battery was manufactured in the same manner as in Example 1 except for using PVdF as the first binder and forming the first mixture layer by preparing a positive electrode slurry containing a first positive electrode active material, a positive electrode additive, a first conductive material and a first binder in N-methylpyrrolidone.

### Experimental Example

In order to evaluate the performance of the positive electrode additive according to the present invention, the following experiment was performed.

### A) Evaluation of static water contact angle of positive electrode mixture layer

The positive electrodes were manufactured in the same as in Examples 1 to 3 and Comparative Examples 1 to 3, and when the first mixture layer and the second mixture layer were each formed, a static water contact angle with respect to a surface of each mixture layer was measured. Here, the static water contact angle was measured by a sessile drop method. Specifically, the measurement was performed by dropping one drop of purified water on the surface of each mixture layer, capturing an image of the dropped purified water drop, and then analyzing the captured image.

### B) Evaluation of interfacial adhesive strength of positive electrode mixture layer

The positive electrodes manufactured in Examples 1 to 3 and Comparative Examples 1 to 3 were cut to have a horizontal length and a vertical length of 25 mm and 70 mm, respectively, and lamination was performed using a press under conditions in which a temperature was 70 °C and a pressure of 4 MPa to prepare test samples. The prepared test samples were attached and fixed to a glass plate using double-sided tape. In this case, the positive electrode current collector was disposed to face the glass plate. Separator portions of the test samples were peeled at an angle of 90°, a temperature of 25°C, and a speed of 100 mm/min using a tensile tester, peel forces were measured in real time, and an average value of the measured peel forces was defined as the interfacial adhesive strength between the first mixture layer and the second mixture layer. Then, the interfacial adhesive strength between the positive electrode current collector and the first mixture layer was also measured by continuously performing the same method. The results are shown in Table 2 below.

### C) Evaluation of battery charging/discharging capacity

First, 84 parts by weight of natural graphite and 14 parts by weight of silicon (SiOₓ) particles (here, 1≤x≤2) as a negative electrode active material, and 2 parts by weight of SBR as a binder were prepared based on 100 parts by weight of a solid content of a negative electrode slurry, and a negative electrode slurry was prepared in the same manner as the positive electrode slurry. In this case, the graphite used in the formation of the negative electrode mixture layer was natural graphite (an average particle size: 0.01 µm to 0.5 µm), and SiOₓ particles having an average particle size ranging from 0.9 µm to 1.1 µm were used. The prepared negative electrode slurry was applied on one surface of a copper current collector, dried at a temperature of 100 °C, and rolled to manufacture a negative electrode. In this case, the total thickness of the negative electrode mixture layer was 150 µm, and the total thickness of the manufactured negative electrode was about 250 µm.

A separator (a thickness: about 16 µm) made of a porous polyethylene (PE) film was interposed between the positive electrode, which was manufactured in Examples 1 to 3 and Comparative Examples 1 to 3, and the negative electrode, and E2DVC as an electrolyte was injected to manufacture a lithium secondary battery in the form of a full cell.

Here, "E2DVC" is one kind of carbonate-based electrolyte and is a solution in which a mixture of ethylene carbonate (EC):dimethyl carbonate (DMC):diethyl carbonate (DEC)=1:1:1 (volume ratio) is mixed with lithium hexafluorophosphate (LiPF₆ of 1.0M) and vinyl carbonate (VC of 2 wt%).

The manufactured lithium secondary battery was charged at a temperature of 25 °C with a charging current of 0.1 C to a charging termination voltage ranging from 4.2 V to 4.25 V and was activated by performing the charging until a current density reached 0.01 C at the charging termination voltage. Then, the lithium secondary battery was discharged to a termination voltage of 2 V with a discharge current of 0.1 C, an initial charging/discharging capacity per unit mass was measured, and the results are shown in Table 2 below.

**[Table 2]**

| | Static water contact angle | | | Interfacial adhesive strength [N/m] | | Initial charging capacity |
|---|---|---|---|---|---|---|
| | First mixture layer (A) | Second mixture layer (B) | A-B | Current collector-first mixture layer | First mixture layer-second mixture layer | |
| Example 1 | 143° | 110° | 33° | 408 | 38 | 103.8 |
| Example 2 | 142° | 114° | 28° | 413 | 39 | 104.7 |
| Example 3 | 144° | 134° | 10° | 402 | 37 | 104.2 |
| Comparative Example 1 | 141° | 137° | 4⁰ | 374 | 24 | 101.5 |
| Comparative Example 2 | 143° | 144° | -1° | 361 | 25 | 100.2 |
| Comparative Example 3 | 146° | 146° | 0⁰ | 320 | 14 | 101.6 |

Referring to Table 2, it can be seen that the positive electrode for a lithium secondary battery according to the present technology has excellent adhesive strength between the positive electrode current collector and the positive electrode mixture layer and a charging capacity of the battery is also high.

Specifically, since the positive electrodes for a lithium secondary battery of the embodiments according to the present technology contained a rubber-based resin and a fluorine-based resin as binders in the first mixture layer and the second mixture layer, respectively, and thus an affinity for water of each mixture layer was controlled, it was shown that a difference in static water contact angle deviation (A-B) between the first mixture layer (A) with a low affinity for water and the second mixture layer (B) was 5° or more. It can be seen that the difference improves the interfacial adhesive strength between the positive electrode current collector and the first mixture layer and the interfacial adhesive strength between the first mixture layer and the second mixture layer, and when the positive electrode additive is used in the first mixture layer with a low affinity for water, it can be seen that damage to the positive electrode additive is prevented and thus an initial charging capacity is high.

From the above results, the positive electrode for a lithium secondary battery according to the present technology has a structure in which the positive electrode current collector, the first mixture layer, and the second mixture layer are sequentially stacked, and by using a binder exhibiting more hydrophobicity than the binder contained in the second mixture layer in the first mixture layer located adjacent to the positive electrode current collector, since the adhesive strength between the positive electrode current collector and the mixture layer can be further improved, it can be seen that durability of the positive electrode can be improved, and when the first mixture layer contains the positive electrode additive, when the positive electrode is manufactured, damage to the positive electrode additive can be minimized due to the first binder having a low affinity for water so that the electrical performance and lifetime of the lithium secondary battery can be further improved.

## Claims

1. A positive electrode for a lithium secondary battery that has a structure in which a current collector, a first mixture layer, and a second mixture layer are sequentially stacked, wherein:
the second mixture layer includes a second binder composed of a fluorine-based resin derived from a fluorine (F)-containing monomer, and
**characterized in that**:
the first mixture layer includes a first binder composed of a rubber-based resin; and
a static water contact angle of the first mixture layer is 10° or more greater than a static water contact angle of the second mixture layer; and
wherein the static water contact angle with respect to a surface of each mixture layer is determined by sessile drop method performed by dropping one drop of purified water on the surface of each mixture layer, capturing an image of the dropped purified water drop, and then analyzing the captured image.

2. The positive electrode of claim 1, wherein a static water contact angle of the first mixture layer is 10° to 30° greater than a static water contact angle of the second mixture layer.

3. The positive electrode of claim 1, wherein the rubber-based resin includes one or more selected from the group consisting of styrene-butadiene rubber, nitrile-butadiene rubber, methyl methacrylate-butadiene rubber, chloroprene rubber, carboxy-modified styrene-butadiene rubber, and a modified polyorganosiloxane polymer.

4. The positive electrode of claim 1, wherein the fluorine-based resin includes a resin derived from one or more monomers selected from the group consisting of vinylidene fluoride (VDF or VF2), tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, and 2-trifluoromethyl-3, 3,3-trifluoropropene.

5. The positive electrode of claim 1, wherein:
a content of a first binder ranges from 0.5 to 5 parts by weight based on 100 parts by weight of the first mixture layer; and
a content of a second binder ranges from 0.5 to 10 parts by weight based on 100 parts by weight of the second mixture layer,
wherein a total content of the first and second binders ranges from 0.1 to 5 parts by weight based on 100 parts by weight of a combined weight of the first and second mixture layers.

6. The positive electrode of claim 1, wherein one or both of the first mixture layer and the second mixture layer contain a positive electrode additive represented by the following Chemical Formula 1:
[Chemical Formula 1] LiₚCo(₁-_{q})M¹_{q}O₄,
in Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

7. The positive electrode of claim 6, wherein the positive electrode additive is included an amount ranging from 0.1 to 5 parts by weight based on 100 parts by weight of the first mixture layer, and
wherein the positive electrode additive is present an amount ranging from 0.1 to 5 parts by weight based on 100 parts by weight of the second mixture layer.

8. The positive electrode of claim 6, wherein the positive electrode additive has a tetragonal structure with a space group of P4₂/nmc.

9. The positive electrode of claim 1, wherein:
the first mixture layer includes a first positive electrode active material, a first conductive material, a positive electrode additive, and a first binder; and
the second mixture layer includes a second positive electrode active material, a second conductive material, and a second binder.

10. The positive electrode of claim 9, wherein each of the first positive electrode active material and the second positive electrode active material includes a lithium metal composite oxide represented by the following Chemical Formula 2:
[Chemical Formula 2] Liₓ[^{N}i_{y}Co_{z}Mn_{w}M²ᵥ]Oᵤ,
in Chemical Formula 2, M² denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively.

11. The positive electrode of claim 9, wherein each of the first conductive material and the second conductive material includes one or more selected from the group consisting of natural graphite, artificial graphite, carbon black, acetylene black, Ketjen black, carbon nanotubes, graphene, and a carbon fiber.

12. The positive electrode of claim 9, wherein a content of the first conductive material ranges from 0.5 to 5 parts by weight based on 100 parts by weight of the first mixture layer, and
wherein a content of the second conductive material ranges from 0.5 to 5 parts by weight based on 100 parts by weight of the second mixture layer.

13. A method of manufacturing a positive electrode for a lithium secondary battery, the method comprising:
forming a first mixture layer containing a first binder composed of a rubber-based resin on a positive electrode current collector; and
forming a second mixture layer containing a second binder composed of a fluorine-based resin derived from a fluorine (F)-containing monomer on the first mixture layer,
a static water contact angle of the first mixture layer is 10° or more greater than a static water contact angle of the second mixture layer; and
wherein the static water contact angle with respect to a surface of each mixture layer is determined by sessile drop method performed by dropping one drop of purified water on the surface of each mixture layer, capturing an image of the dropped purified water drop, and then analyzing the captured image.

14. The method of claim 13, wherein one or both of the first mixture layer and the second mixture layer contain a positive electrode additive represented by the following Chemical Formula 1:
[Chemical Formula 1] LiₚCo(₁-_{q})M¹_{q}O₄,
in Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

15. The method of claim 13, wherein the forming of the first mixture layer comprises:
dry mixing a first positive electrode active material, a positive electrode additive represented by Chemical Formula 1, a first conductive material, and a first binder composed of a rubber-based resin to form a mixture composition; and
applying the mixture composition on the current collector:
[Chemical Formula 1] LiₚCo(₁-_{q})M¹_{q}O₄,
in Chemical Formula 1, M¹ denotes at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

## Patentansprüche

1. Positive Elektrode für eine Lithium-Sekundärbatterie, die einen Aufbau aufweist, in welchem ein Stromabnehmer, eine erste Mischungsschicht und eine zweite Mischungsschicht nacheinander übereinandergeschichtet sind, wobei:
die zweite Mischungsschicht ein zweites Bindemittel enthält, aufgebaut aus einem Harz auf Fluorbasis, das von einem fluorhaltigen (F) Monomer abgeleitet ist, und
**dadurch gekennzeichnet, dass**:
die erste Mischungsschicht ein erstes Bindemittel enthält, aufgebaut aus einem Harz auf Kautschukbasis; und
ein statischer Wasserkontaktwinkel der ersten Mischungsschicht um 10° oder mehr größer ist als ein statischer Wasserkontaktwinkel der zweiten Mischungsschicht; und
wobei der statische Wasserkontaktwinkel in Bezug auf eine Oberfläche jeder Mischungsschicht durch das Sessile-Drop-Verfahren bestimmt wird, bei dem ein Tropfen gereinigtes Wasser auf die Oberfläche jeder Mischungsschicht getropft, ein Bild des aufgetropften Tropfens gereinigten Wassers aufgenommen und anschließend das aufgenommene Bild analysiert wird.

2. Positive Elektrode gemäß Anspruch 1, wobei der statische Wasserkontaktwinkel der ersten Mischungsschicht um 10° bis 30° größer ist als der statische Wasserkontaktwinkel der zweiten Mischungsschicht.

3. Positive Elektrode gemäß Anspruch 1, wobei das Harz auf Kautschukbasis ein oder mehrere Elemente enthält, die ausgewählt sind aus der Gruppe bestehend aus Styrol-Butadien-Kautschuk, Nitril-Butadien-Kautschuk, Methylmethacrylat-Butadien-Kautschuk, Chloropren-Kautschuk, carboxymodifiziertem Styrol-Butadien-Kautschuk und einem modifizierten Polyorganosiloxan-Polymer.

4. Positive Elektrode gemäß Anspruch 1, wobei das Harz auf Fluorbasis ein Harz enthält, das von einem oder mehreren Monomeren abgeleitet ist, die ausgewählt sind aus der Gruppe bestehend aus Vinylidenfluorid (VDF oder VF2), Tetrafluorethylen (TFE), Trifluorethylen (TrFE), Chlortrifluorethylen (CTFE), Hexafluorpropen (HFP), Vinylfluorid (VF), Hexafluorisobutylen (HFIB), Perfluorbutylethylen (PFBE), Pentafluorpropen, 3,3,3-Trifluor-1-propen und 2-Trifluormethyl-3,3,3-trifluorpropen.

5. Positive Elektrode gemäß Anspruch 1, wobei:
ein Gehalt eines ersten Bindemittels zwischen 0,5 und 5 Gewichtsteilen, bezogen auf 100 Gewichtsteile der ersten Mischungsschicht, liegt; und
ein Gehalt eines zweiten Bindemittels zwischen 0,5 und 10 Gewichtsteilen, bezogen auf 100 Gewichtsteile der zweiten Mischungsschicht, liegt,
wobei der Gesamtgehalt des ersten und des zweiten Bindemittels zwischen 0,1 und 5 Gewichtsteilen, bezogen auf 100 Gewichtsteile des kombinierten Gewichts der ersten und zweiten Mischungsschichten, liegt.

6. Positive Elektrode gemäß Anspruch 1, wobei eine oder beide aus der ersten Mischungsschicht und der zweiten Mischungsschicht ein Additiv für die positive Elektrode enthalten, das durch die folgende chemische Formel 1 dargestellt wird:
[Chemische Formel 1] LiₚCo_{(1-q)}M¹_{q}O_{4,}
worin, in der chemischen Formel 1, M¹ mindestens ein Element bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und p und q jeweils 5 ≤ p ≤ 7 bzw. 0 ≤ q ≤ 0,5 sind.

7. Positive Elektrode gemäß Anspruch 6, wobei das Additiv für die positive Elektrode in einer Menge von 0,1 bis 5 Gewichtsteilen, bezogen auf 100 Gewichtsteile der ersten Mischungsschicht, enthalten ist, und
wobei das Additiv für die positive Elektrode in einer Menge von 0,1 bis 5 Gewichtsteilen, bezogen auf 100 Gewichtsteile der zweiten Mischungsschicht, vorhanden ist.

8. Positive Elektrode gemäß Anspruch 6, wobei das Additiv für die positive Elektrode eine tetragonale Struktur mit der Raumgruppe P4₂/nmc aufweist.

9. Positive Elektrode gemäß Anspruch 1, wobei:
die erste Mischungsschicht ein erstes Positivelektrodenaktivmaterial, ein erstes leitfähiges Material, ein Additiv für die positive Elektrode und ein erstes Bindemittel enthält; und
die zweite Mischungsschicht ein zweites Positivelektrodenaktivmaterial, ein zweites leitfähiges Material und ein zweites Bindemittel enthält.

10. Positive Elektrode gemäß Anspruch 9, wobei sowohl das erste Positivelektrodenaktivmaterial als auch das zweite Positivelektrodenaktivmaterial ein Lithiummetall-Verbundoxid enthalten, das durch die folgende chemische Formel 2 dargestellt wird:
[Chemische Formel 2] Liₓ[Ni_{y}Co_{z}Mn_{w}M²ᵥ]O_{u,}
worin, in der chemischen Formel 2, M² mindestens ein Element bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und x, y, z, w, v und u jeweils 1,0 ≤ x ≤ 1,30, 0,1 ≤ y < 0,95, 0,01 < z ≤ 0,5, 0,01 < w ≤ 0,5, 0 ≤ v ≤ 0,2 und 1,5 ≤ u ≤ 4,5 sind.

11. Positive Elektrode gemäß Anspruch 9, wobei sowohl das erste leitfähige Material als auch das zweite leitfähige Material jeweils eines oder mehrere ausgewählt aus der Gruppe bestehend aus natürlichem Graphit, künstlichem Graphit, Ruß, Acetylenruß, Ketjen-Ruß, Kohlenstoffnanoröhren, Graphen und einer Kohlenstofffaser enthält.

12. Positive Elektrode gemäß Anspruch 9, wobei der Gehalt des ersten leitfähigen Materials zwischen 0,5 und 5 Gewichtsteilen, bezogen auf 100 Gewichtsteile der ersten Mischungsschicht, liegt und
wobei der Gehalt des zweiten leitfähigen Materials zwischen 0,5 und 5 Gewichtsteilen, bezogen auf 100 Gewichtsteile der zweiten Mischungsschicht, liegt.

13. Verfahren zur Herstellung einer positiven Elektrode für eine Lithium-Sekundärbatterie, wobei das Verfahren folgendes umfasst:
das Aufbringen einer ersten Mischungsschicht, die ein erstes Bindemittel enthält, aufgebaut aus einem Harz auf Kautschukbasis, auf einen Stromabnehmer der positiven Elektrode; und
das Aufbringen einer zweiten Mischungsschicht, die ein zweites Bindemittel enthält, aufgebaut aus einem Harz auf Fluorbasis, das von einem fluorhaltigen (F) Monomer abgeleitet ist, auf die erste Mischungsschicht,
wobei ein statischer Wasserkontaktwinkel der ersten Mischschicht um 10° oder mehr größer ist als ein statischer Wasserkontaktwinkel der zweiten Mischschicht; und
wobei der statische Wasserkontaktwinkel in Bezug auf eine Oberfläche jeder Mischschicht durch das Sessile-Drop-Verfahren bestimmt wird, bei dem ein Tropfen gereinigtes Wasser auf die Oberfläche jeder Mischungsschicht getropft, ein Bild des aufgetropften Tropfens gereinigten Wassers aufgenommen und anschließend das aufgenommene Bild analysiert wird.

14. Verfahren gemäß Anspruch 13, bei dem eine oder beide aus der ersten Mischungsschicht und der zweiten Mischungsschicht ein Additiv für die positive Elektrode enthalten, das durch die folgende chemische Formel 1 dargestellt wird:
[Chemische Formel 1] LiₚCo_{(1-q)}M¹_{q}O_{4,}
worin, in der chemischen Formel 1, M¹ mindestens ein Element bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und p und q jeweils 5 ≤ p ≤ 7 bzw. 0 ≤ q ≤ 0,5 sind.

15. Verfahren gemäß Anspruch 13, bei dem das Bilden der ersten Mischungsschicht folgendes umfasst:
das Trockenmischen eines ersten Positivelektrodenaktivmaterials, eines durch die chemische Formel 1 dargestellten Additivs für die positive Elektrode, eines ersten leitfähigen Materials und eines ersten Bindemittels, aufgebaut aus einem Harz auf Kautschukbasis, um eine Mischungszusammensetzung zu bilden; und
das Aufbringen der Mischungszusammensetzung auf den Stromabnehmer:
[Chemische Formel 1] LiₚCo_{(1-q)}M¹_{q}O_{4,}
worin, in der chemischen Formel 1, M¹ mindestens ein Element bezeichnet, ausgewählt aus der Gruppe bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und p und q jeweils 5 ≤ p ≤ 7 bzw. 0 ≤ q ≤ 0,5 sind.

## Revendications

1. Électrode positive pour une batterie secondaire au lithium qui présente une structure dans laquelle un collecteur de courant, une première couche de mélange et une deuxième couche de mélange sont empilés séquentiellement, dans laquelle :
la deuxième couche de mélange inclut un deuxième liant constitué d'une résine à base de fluor dérivée d'un monomère contenant du fluor (F), et
**caractérisée en ce que** :
la première couche de mélange inclut un premier liant constitué d'une résine à base de caoutchouc ; et
un angle de contact statique avec l'eau de la première couche de mélange est supérieur de 10° ou plus à un angle de contact statique avec l'eau de la deuxième couche de mélange ; et
dans laquelle l'angle de contact statique avec l'eau par rapport à une surface de chaque couche de mélange est déterminé par la méthode de la goutte sessile réalisée en faisant tomber une goutte d'eau purifiée sur la surface de chaque couche de mélange, en capturant une image de la goutte d'eau purifiée tombée, puis en analysant l'image capturée.

2. Électrode positive selon la revendication 1, dans laquelle un angle de contact statique avec l'eau de la première couche de mélange est supérieur de 10° à 30° à un angle de contact statique avec l'eau de la deuxième couche de mélange.

3. Électrode positive selon la revendication 1, dans laquelle la résine à base de caoutchouc inclut un ou plusieurs sélectionnés dans le groupe consistant en le caoutchouc styrène-butadiène, le caoutchouc nitrile-butadiène, le caoutchouc méthacrylate de méthyle-butadiène, le caoutchouc chloroprène, le caoutchouc styrène-butadiène à modification carboxy, et un polymère de polyorganosiloxane modifié.

4. Électrode positive selon la revendication 1, dans laquelle la résine à base de fluor inclut une résine dérivée d'un ou plusieurs monomères sélectionnés dans le groupe consistant en le fluorure de vinylidène (VDF ou VF2), le tétrafluoroéthylène (TFE), le trifluoroéthylène (TrFE), le chlorotrifluoroéthylène (CTFE), l'hexafluoropropène (HFP), le fluorure de vinyle (VF), l'hexafluoroisobutylène (HFIB), le perfluorobutyléthylène (PFBE), le pentafluoropropène, le 3,3,3-trifluoro-1-propène et le 2-trifluorométhyl-3,3,3-trifluoropropène.

5. Électrode positive selon la revendication 1, dans laquelle :
une teneur d'un premier liant va de 0,5 à 5 parties en poids sur la base de 100 parties en poids de la première couche de mélange ; et
une teneur d'un deuxième liant va de 0,5 à 10 parties en poids sur la base de 100 parties en poids de la deuxième couche de mélange,
dans laquelle une teneur totale des premier et deuxième liants va de 0,1 à 5 parties en poids sur la base de 100 parties en poids d'un poids combiné des première et deuxième couches de mélange.

6. Électrode positive selon la revendication 1, dans laquelle l'une ou les deux parmi la première couche de mélange et la deuxième couche de mélange contiennent un additif d'électrode positive représenté par la formule chimique 1 suivante :
[Formule chimique 1] LiₚCo_{(1-q)}M¹_{q}O₄,
dans la formule chimique 1, M¹ désigne au moins un élément sélectionné dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et p et q sont 5 ≤ p ≤ 7 et 0 ≤ q ≤ 0,5, respectivement.

7. Électrode positive selon la revendication 6, dans laquelle l'additif d'électrode positive est inclus en une quantité allant de 0,1 à 5 parties en poids sur la base de 100 parties en poids de la première couche de mélange, et
dans laquelle l'additif d'électrode positive est présent en une quantité allant de 0,1 à 5 parties en poids sur la base de 100 parties en poids de la deuxième couche de mélange.

8. Électrode positive selon la revendication 6, dans laquelle l'additif d'électrode positive présente une structure tétragonale avec un groupe spatial de P4₂/nmc.

9. Électrode positive selon la revendication 1, dans laquelle :
la première couche de mélange inclut un premier matériau actif d'électrode positive, un premier matériau conducteur, un additif d'électrode positive et un premier liant ; et
la deuxième couche de mélange inclut un deuxième matériau actif d'électrode positive, un deuxième matériau conducteur et un deuxième liant.

10. Électrode positive selon la revendication 9, dans laquelle chacun du premier matériau actif d'électrode positive et du deuxième matériau actif d'électrode positive inclut un oxyde composite lithium-métal représenté par la formule chimique 2 suivante :
[Formule chimique 2] Liₓ[Ni_{y}Co_{z}Mn_{w}M²ᵥ]Oᵤ,
dans la formule chimique 2, M² désigne au moins un élément sélectionné dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et x, y, z, w, v et u sont 1,0 ≤ x ≤ 1,30, 0,1 ≤ y ≤ 0,95, 0,01 < z ≤ 0,5, 0,01 < w ≤ 0,5, 0 ≤ v ≤ 0,2 et 1,5 ≤ u ≤ 4,5, respectivement.

11. Électrode positive selon la revendication 9, dans laquelle chacun du premier matériau conducteur et du deuxième matériau conducteur inclut un ou plusieurs sélectionnés dans le groupe consistant en le graphite naturel, le graphite artificiel, le noir de carbone, le noir d'acétylène, le noir de Ketjen, les nanotubes de carbone, le graphène, et la fibre de carbone.

12. Électrode positive selon la revendication 9, dans laquelle une teneur du premier matériau conducteur va de 0,5 à 5 parties en poids sur la base de 100 parties en poids de la première couche de mélange, et
dans laquelle une teneur du deuxième matériau conducteur va de 0,5 à 5 parties en poids sur la base de 100 parties en poids de la deuxième couche de mélange.

13. Procédé de fabrication d'une électrode positive pour une batterie secondaire au lithium, le procédé comprenant :
la formation d'une première couche de mélange contenant un premier liant constitué d'une résine à base de caoutchouc sur un collecteur de courant d'électrode positive ; et
la formation d'une deuxième couche de mélange contenant un deuxième liant constitué d'une résine à base de fluor dérivée d'un monomère contenant du fluor (F) sur la première couche de mélange,
un angle de contact statique avec l'eau de la première couche de mélange est supérieur de 10° ou plus à un angle de contact statique avec l'eau de la deuxième couche de mélange ; et
dans lequel l'angle de contact statique avec l'eau par rapport à une surface de chaque couche de mélange est déterminé par la méthode de la goutte sessile réalisée en faisant tomber une goutte d'eau purifiée sur la surface de chaque couche de mélange, en capturant une image de la goutte d'eau purifiée tombée, puis en analysant l'image capturée.

14. Procédé selon la revendication 13, dans lequel l'une ou les deux parmi la première couche de mélange et la deuxième couche de mélange contiennent un additif d'électrode positive représenté par la formule
chimique 1 suivante :
[Formule chimique 1] LiₚCo_{(1-q)}M¹_{q}O₄,
dans la formule chimique 1, M¹ désigne au moins un élément sélectionné dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et p et q sont 5 ≤ p ≤ 7 et 0 ≤ q ≤ 0,5, respectivement.

15. Procédé selon la revendication 13, dans lequel la formation de la première couche de mélange comprend :
le mélange à sec d'un premier matériau actif d'électrode positive, d'un additif d'électrode positive représenté par la formule chimique 1, d'un premier matériau conducteur et d'un premier liant constitué d'une résine à base de caoutchouc pour former une composition de mélange ; et
l'application de la composition de mélange sur le collecteur de courant :
[Formule chimique 1] LiₚCo_{(1-q)}M¹_{q}O₄,
dans la formule chimique 1, M¹ désigne au moins un élément sélectionné dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et p et q sont 5 ≤ p ≤ 7 et 0 ≤ q ≤ 0,5, respectivement.
